# FASCICULE DE BREVET EUROPEEN

(11) **EP 1 365 138 B1**
(45) Date de publication et mention de la délivrance du brevet: **25.04.2007**
(21) Numéro de dépôt: 03291001.0
(22) Date de dépôt: 24.04.2003
(51) Int. Cl.: F02K 9/97

(54) **Moteur à noyau central pour lanceur spatial**
Pilzdüse mit einem faltbaren Innenkegel
Plug nozzle with a foldable inner cone

(30) Priorité: 21.05.2002 FR 0206155
(43) Date de publication de la demande: 26.11.2003
(73) Titulaire: ASTRIUM SAS, 75016 Paris (FR)
(72) Inventeur: Calabro, Max, 78670 Villennes (FR)
(74) Mandataire: Bonnetat, Christian

(56) Documents cités:
- EP-A- 0 018 300
- FR-A- 1 460 610
- FR-A- 2 422 831
- US-A- 3 482 783
- HAGEMANN G ET AL: "ADVANCED ROCKET NOZZLES" JOURNAL OF PROPULSION AND POWER, AMERICAN INSTITUTE OF AERONAUTICS AND ASTRONAUTICS. NEW YORK, US, vol. 14, no. 5, 1 septembre 1998 (1998-09-01), pages 620-634, XP000778443 ISSN: 0748-4658

## Description

La présente invention concerne un moteur à noyau central pour lanceur spatial, du type connu dans la technique sous la dénomination "aerospike".

Un tel moteur, particulièrement approprié --quoique non exclusivement-- à la propulsion de l'étage supérieur d'un tel lanceur spatial est par exemple décrit dans le document AIAA 2001-3692 "Innovative Upper Stage Propulsion Concepts For Future Launchers" édité à l'occasion de la conférence et de l'exposition "37^{th} AIAA/ASME/SAE/ASEE JPC Conference and Exhibit" qui ont eu lieu du 8 au 11 juillet 2001 à Salt Lake City (Etats-Unis d'Amérique - Etat de l'Utah).

Les particularités structurelles essentielles de ce moteur "aerospike" sont de présenter un noyau central et des moyens générateurs de flux gazeux sous pression, adressant ceux-ci sur la surface dudit noyau central. Ce noyau central est coaxial à l'axe longitudinal du moteur et il comporte une surface latérale fonctionnelle au moins approximativement à la forme d'un cône dont la base et le sommet sont respectivement disposés du côté dudit moteur et à l'opposé de celui-ci. Quant à eux, lesdits moyens générateurs de flux gazeux sous pression sont constitués par une pluralité de générateurs individuels qui sont répartis autour de l'axe du moteur, au voisinage de la base dudit noyau central, de façon que les flux gazeux desdits générateurs individuels frappent ladite surface latérale du noyau central.

Bien entendu, la poussée d'un tel moteur résulte de l'application, sur ladite surface fonctionnelle du noyau, de la pression exercée par lesdits flux gazeux et cette poussée est d'autant plus forte que cette surface fonctionnelle est plus grande, de sorte que, pour un moteur déterminé, la poussée est d'autant plus forte que le noyau est plus long. Il en résulte qu'un moteur "aerospike" performant présente un encombrement longitudinal important, ce qui est fortement préjudiciable dans le domaine spatial. Voir aussi le document FR-A-1460610.

La présente invention a pour objet de remédier à cet inconvénient.

A cette fin, selon l'invention, le moteur pour lanceur spatial, notamment approprié à la propulsion de l'étage supérieur d'un tel lanceur, ledit moteur ayant un axe longitudinal et comportant :
- un noyau central, coaxial audit axe longitudinal et comportant une surface latérale fonctionnelle au moins approximativement à la forme d'un cône dont la base est disposée du côté du moteur ; et
- des moyens générateurs de flux gazeux sous pression, disposés à la périphérie de ladite base de la surface latérale fonctionnelle et engendrant des flux gazeux sous pression frappant ladite surface latérale fonctionnelle,
est remarquable en ce que, du côté opposé à ladite base, la partie d'extrémité en pointe dudit noyau central est constituée par une structure déformable pouvant prendre :
- soit une position repliée, pour laquelle ladite pointe dudit noyau central est tronquée, la surface latérale dudit noyau central étant alors plus courte que ladite surface latérale fonctionnelle ;
- soit une position déployée, pour laquelle la surface latérale dudit noyau central correspond à ladite surface latérale fonctionnelle.

Ainsi, grâce à la présente invention, le moteur peut, en dehors de sa phase de fonctionnement, présenter une longueur limitée (position repliée de la structure déformable), alors que, en fonctionnement, ladite structure déformable est en position déployée et ledit moteur comporte le noyau de forme et longueur appropriées à son bon fonctionnement, avec une impulsion spécifique élevée.

On remarquera que, du côté de sa pointe, ledit noyau est soumis à des contraintes thermomécaniques moindres que du côté de ladite base. Aussi, ladite structure déformable pourrait être du type vessie gonflable. Cependant, de préférence, ladite structure déformable comporte une paroi pliable, mais non extensible, qui, en position déployée, forme la pointe d'extrémité dudit noyau central opposée à ladite base. Cette paroi pliable peut comporter une pluralité d'anneaux, qui sont coaxiaux audit axe longitudinal et qui sont reliés les uns aux autres à la manière d'un accordéon par des lignes circulaires d'articulation. Une telle paroi pliable est de préférence réalisée à base de fibres de carbone, par exemple en un tissu de carbone sec ou en une moquette de carbone, doublé intérieurement d'une couche d'élastomère assurant l'isolation thermique et l'étanchéité. Ainsi, ladite structure déformable peut passer de sa position pliée à sa position déployée sous l'action d'un gaz sous pression.

On remarquera que, dans les moteurs à noyau central connu, le combustible et le comburant sont contenus dans des réservoirs, qui sont mis sous pression par un gaz (hélium) contenu dans au moins un troisième réservoir, et que ce troisième réservoir est généralement logé dans la pointe dudit noyau. Une telle disposition dudit troisième réservoir est donc gênante pour la mise en oeuvre à plein effet de la présente invention. Aussi, selon une autre caractéristique du moteur conforme à l'invention, ledit troisième réservoir est logé dans l'un ou l'autre desdits réservoirs contenant le combustible et le comburant, respectivement. Ainsi, il libère l'espace intérieur de la pointe du noyau, qui peut ainsi être conformé en structure déformable pliable et déployable. De plus, il est avantageux d'utiliser le gaz dudit troisième réservoir pour actionner ladite paroi pliable décrite ci-dessus.

Les figures du dessin annexé feront bien comprendre comment l'invention peut être réalisée. Sur ces figures, des références identiques désignent des éléments semblables.

La figure 1 est une coupe axiale en perspective d'un mode de réalisation du moteur pour lanceur spatial conforme à la présente invention, le noyau central dudit moteur étant représenté tronqué à son extrémité opposée à ce dernier.

La figure 2 est une vue semblable à celle de la figure 1, le noyau central étant déployé.

La figure 3 illustre, de façon schématique et simplifiée, un exemple de réalisation de structure déformable pour la partie d'extrémité dudit noyau central, ladite structure étant représentée repliée.

La figure 4 montre ladite partie d'extrémité en position déployée.

La figure 5 est une coupe schématique, à plus grande échelle, donnant un exemple de réalisation de la paroi dont est constituée la structure déformable des figures 3 et 4.

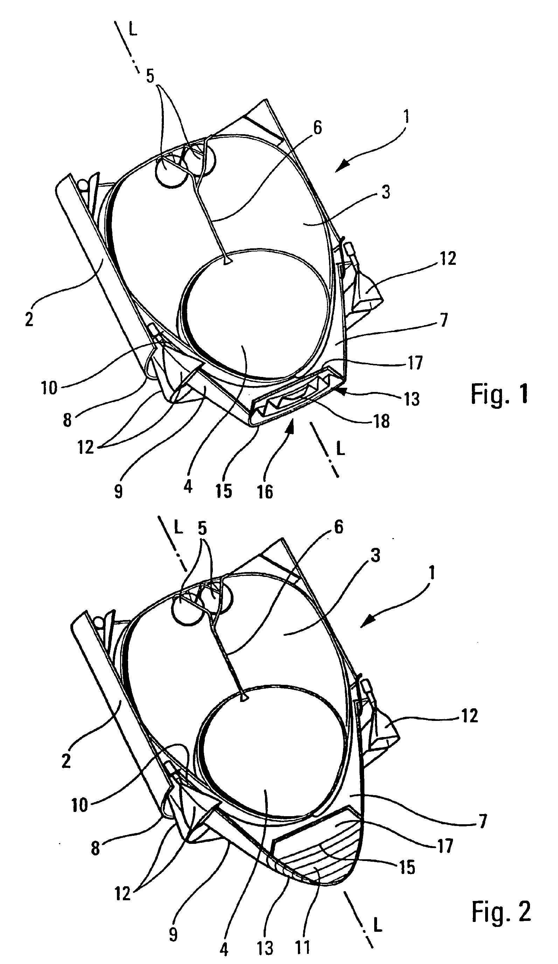

Le moteur 1 pour lanceur spatial, conforme à la présente invention et représenté schématiquement sur les figures 1 et 2, présente un axe longitudinal L-L et comporte une enveloppe cylindrique creuse 2, à l'intérieur de laquelle sont logés un réservoir de combustible 3 (à base d'hydrogène) et un réservoir de comburant 4 (à base d'oxygène). En réalité, le réservoir de comburant 4 se trouve à l'intérieur du réservoir de combustible 3. Il en est de même de deux réservoirs 5 en forme de sphères, contenant un gaz sous pression (hélium) et chargé de mettre sous pression les réservoirs 3 et 4, grâce à des conduits comme celui portant la référence 6.

Le moteur 1 comporte de plus un noyau central 7, coaxial audit axe longitudinal et faisant saillie hors de ladite enveloppe creuse 2, à travers l'ouverture arrière ouverte 8 de celle-ci. Le noyau central 7 présente une surface latérale fonctionnelle 9, au moins approximativement en forme de cône dont la base 10 est disposée du côté dudit moteur. Sur la figure 2, la pointe 11 dudit noyau central 7, opposée à ladite base 10, est représentée de forme arrondie.

Autour de la base 10 du noyau 7 sont répartis périphériquement une pluralité de générateurs de gaz 12, dont chacun d'eux engendre un flux gazeux sous pression individuel apte à frapper ladite surface latérale fonctionnelle 9.

Comme cela est illustré par les figures 1 et 2, la pointe 11 du noyau central 7, est constituée par une structure déformable pouvant prendre :
- soit une position repliée (figure 1) pour laquelle ledit noyau central 7 est tronqué du côté opposé à la base 10, ledit noyau central 7 étant ainsi raccourci et présentant une surface latérale plus petite que ladite surface latérale fonctionnelle 9 ;
- soit une position déployée (figure 2) pour laquelle ledit noyau central prend sa configuration fonctionnelle

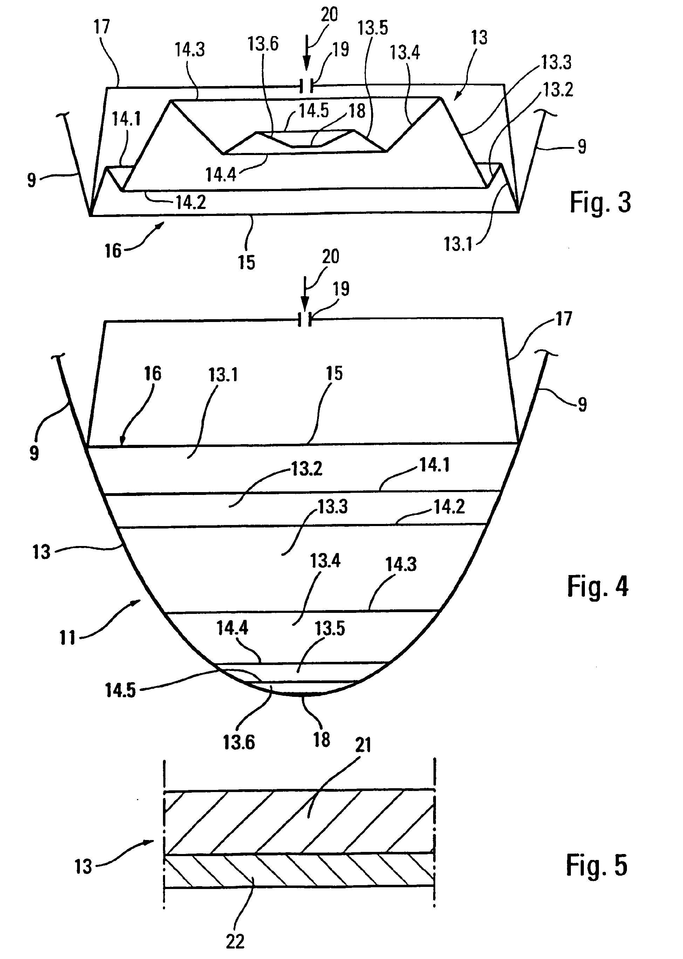

Sur les figures 3 et 4, on a représenté schématiquement un mode de réalisation préféré pour la structure déformable de ladite pointe 11. Celle-ci comporte une paroi pliable, mais non extensible 13, constituée d'une pluralité d'anneaux concentriques 13.1 à 13.6 qui sont reliés les uns aux autres, à la manière d'un accordéon, par des lignes de pliage 14.1 à 14.5. De plus, l'anneau le plus grand 13.1 est articulé de façon étanche, par une ligne de pliage 15, au bord de l'ouverture 15 d'un carter 17 raccordé à la paroi latérale 9, tandis que l'anneau le plus petit 13.6 est obturé par une portion de paroi 18.

En position repliée (voir figures 1 et 3), la paroi pliable 13 est logée entièrement dans le carter 17, alors qu'en position déployée (voir figures 2 et 4), la paroi pliable 13 est entièrement disposée à l'extérieur du carter 17 et présente la forme de la pointe 11.

Le passage de la paroi 13 de sa position dépliée à sa position déployée est avantageusement obtenu par introduction d'un gaz sous pression dans le carter 17, à travers un orifice 19 de celui-ci, comme cela est symbolisé schématiquement par la flèche 20. Ce gaz sous pression provient, par exemple et avantageusement, desdits réservoirs 5.

La paroi pliable 13 peut être constituée par au moins une couche 21 d'un tissu de carbone sec ou une moquette de carbone, doublée intérieurement par au moins une couche 28 d'étanchéité et de protection thermique, par exemple, en un élastomère (voir la figure 5). Les anneaux 13.1 à 13.6 et les lignes de pliage 14.1 à 14.5 sont marqués dans la paroi 13, à la fabrication de celle-ci.

## Revendications

1. Moteur (1) pour lanceur spatial, notamment approprié à la propulsion de l'étage supérieur d'un tel lanceur, ledit moteur (1) ayant un axe longitudinal (L-L) et comportant :
- un noyau central (7), coaxial audit axe longitudinal (L-L) et comportant une surface latérale fonctionnelle (9) au moins approximativement à la forme d'un cône dont la base (10) est disposée du côté du moteur ; et
- des moyens (12) générateurs de flux gazeux sous pression, disposés à la périphérie de ladite base (10) de la surface latérale fonctionnelle (9) et engendrant des flux gazeux sous pression frappant ladite surface latérale fonctionnelle (9),
**caractérisé en ce que,** du côté opposé à ladite base (10), la pointe d'extrémité (11) dudit noyau central (7) est constituée par une structure déformable (13) pouvant prendre :
• soit une position repliée, pour laquelle ledit noyau central (7) est tronqué du côté opposé à ladite base (10), la surface latérale dudit noyau central étant alors plus courte que ladite surface latérale fonctionnelle (9) et présentant une surface latérale plus petite que cette dernière ;
• soit une position déployée, pour laquelle la surface latérale dudit noyau central (7) correspond à ladite surface latérale fonctionnelle (9).

2. Moteur selon la revendication 1,
**caractérisé en ce que** ladite structure déformable est du type vessie gonflable.

3. Moteur selon la revendication 1,
**caractérisé en ce que** ladite structure déformable comporte une paroi pliable (13), mais non extensible, qui, en position déployée, forme la pointe d'extrémité (11) dudit noyau central (7) opposée à ladite base (10).

4. Moteur selon la revendication 3,
**caractérisé en ce que** ladite paroi pliable (13) comporte une pluralité d'anneaux concentriques (13.1 à 13.6) reliés les uns aux autres, à la manière d'un accordéon par des lignes circulaires d'articulation (14.1 à 14.5).

5. Moteur selon l'une des revendications 3 ou 4,
**caractérisé en ce que** ladite paroi pliable (13) est réalisée à base de fibres de carbone.

6. Moteur selon la revendication 5,
**caractérisé en ce que** ladite paroi pliable (13) est doublée d'au moins une couche d'élastomère (22).

7. Moteur selon l'une des revendications 3 à 6,
**caractérisé en ce que** ladite paroi pliable (13) passe de la position pliée à la position déployée sous l'action d'un gaz sous pression.

8. Moteur selon la revendication 7, comportant un premier et un second réservoirs (3, 4) contenant respectivement un combustible et un comburant, lesdits réservoirs (7, 4) étant mis sous pression par un gaz contenu dans au moins un troisième réservoir (5),
**caractérisé en ce que** ledit gaz sous pression actionnant ladite paroi pliable (13) provient dudit troisième réservoir (5).

9. Moteur selon l'une des revendications 1 à 8, comportant un premier et un second réservoirs (3, 4) contenant respectivement un combustible et un comburant, lesdits réservoirs (7, 4) étant mis sous pression par un gaz contenu dans au moins un troisième réservoir (5),
**caractérisé en ce que** ledit troisième réservoir (5) est logé dans ledit premier réservoir (3) contenant le combustible.

10. Moteur selon l'une des revendications 1 à 8, comportant un premier et un second réservoirs (3, 4) contenant respectivement un combustible et un comburant, lesdits réservoirs (7, 4) étant mis sous pression par un gaz contenu dans au moins un troisième réservoir (5),
**caractérisé en ce que** ledit troisième réservoir (5) est logé dans ledit second réservoir (4) contenant le comburant.

## Claims

1. An engine (1) for a space launcher, particularly appropriate for propelling the upper stage of such a launcher, said engine (1) having a longitudinal axis (L-L) and comprising:
- a central spike (7) coaxial with said longitudinal axis (L-L) and comprising a functional lateral surface (9) at least approximately in the shape of a cone, the base (10) of which is arranged on the engine side; and
- means (1 2) generating pressurized gaseous flow, these means being arranged at the periphery of said base (10) of the functional lateral surface (9) and generating pressurized gaseous flows that strike said functional lateral surface (9),
**characterized in that**, at the opposite end to said base (10), the pointed end (11) of said central spike (7) consists of a deformable structure (13) that can adopt:
• either a folded position, for which said central spike (7) is truncated at the opposite end to said base (10), the lateral surface of said central spike then being shorter than said functional lateral surface (9) and exhibiting a lateral surface smaller than the latter;
• or a deployed position for which the lateral surface of said central spike (7) corresponds to said functional lateral surface (9).

2. The engine as claimed in claim 1,
**characterized in that** said deformable structure is of the inflatable bladder type.

3. The engine as claimed in claim 1,
**characterized in that** said deformable structure comprises a foldable but inextensile wall (13) which, in the deployed position, forms the pointed end (11) of said central spike (7), opposite to said base (10).

4. The engine as claimed in claim 3,
**characterized in that** said foldable wall (13) comprises a plurality of concentric rings (13.1 to 13.6) connected to one another, in the manner of an accordion, by circular articulation lines (14.1 to 14.5).

5. The engine as claimed in one of claims 3 or 4,
**characterized in that** said foldable wall (13) is produced using carbon fiber.

6. The engine as claimed in claim 5,
**characterized in that** said foldable wall (13) is lined with at least one layer (22) of elastomer.

7. The engine as claimed in one of claims 3 to 6,
**characterized in that** said foldable wall (13) moves from the folded position to the deployed position under the action of a pressurized gas.

8. The engine as claimed in claim 7, comprising a first and a second tank (3,4), these respectively containing a fuel and an oxidizer, said tanks (3,4) being pressurized by a gas contained in at least one third tank (3),
**characterized in that** said pressurized gas actuating said foldable wall (13) comes from said third tank (5).

9. The engine as claimed in one of claims 1 to 8, comprising a first and a second tank (3,4), these respectively containing a fuel and an oxidizer, said tanks (3,4) being pressurized by a gas contained in at least one third tank (5),
**characterized in that** said third tank (5) is housed in said first tank (3) containing the fuel.

10. The engine as claimed in one of claims 1 to 8, comprising a first and a second tank (3,4), these respectively containing a fuel and an oxidizer, said tanks (3,4) being pressurized by a gas contained in at least one third tank (5),
**characterized in that** said third tank (5) is housed in said second tank (4) containing the oxidizer.

## Patentansprüche

1. Triebwerk (1) für eine Startrakete, das insbesondere zum Antrieb der Oberstufe einer solchen Startrakete geeignet ist, wobei das Triebwerk (1) eine Längsachse (L-L) aufweist und umfasst:
- einen Mittelkern (7), der koaxial mit der Längsachse (L-L) ist und eine funktionelle Seitenfläche (9) aufweist, die mindestens annähernd die Form eines Kegels aufweist, dessen Grundfläche (10) an der Seite des Triebwerks angeordnet ist; und
- Mittel (12) zur Erzeugung von Druckgasströmen, die am Umfang der Grundfläche (10) an der funktionellen Seitenfläche (9) angeordnet sind und Druckgasströme erzeugen, die auf die funktionelle Seitenfläche (9) auftreffen,
**dadurch gekennzeichnet, dass** an der Seite, die der Grundfläche (10) entgegengesetzt ist, die äußerste Spitze (11) des Mittelkerns (7) durch eine verformbare Struktur (13) gebildet wird, die Folgendes einnehmen kann:
• entweder eine zusammengefaltete Position, bei der der Mittelkern (7) an der Seite, die der Grundfläche (10) entgegengesetzt ist, abgestumpft ist, so dass die Seitenfläche des Mittelkerns kürzer als die funktionelle Seitenfläche (9) ist und eine kleinere Seitenfläche aufweist als letztere;
• oder eine entfaltete Position, bei der die Seitenfläche des Mittelkerns (7) der funktionellen Seitenfläche (9) entspricht.

2. Triebwerk nach Anspruch 1,
**dadurch gekennzeichnet, dass** die verformbare Struktur vom Typ einer aufblasbaren Blase ist.

3. Triebwerk nach Anspruch 1,
**dadurch gekennzeichnet, dass** die verformbare Struktur eine faltbare, aber nicht dehnbare Wand (13) umfasst, die in der entfalteten Position die äußerste Spitze (11) des Mittelkerns (7) bildet, die der Grundfläche (10) entgegengesetzt ist.

4. Triebwerk nach Anspruch 3,
**dadurch gekennzeichnet, dass** die faltbare Wand (13) eine Vielzahl von konzentrischen Ringen (13.1 bis 13.6) umfasst, die in der Art eines Akkordeons durch kreisförmige Gelenklinien (14.1 bis 14.5) miteinander verbunden sind.

5. Triebwerk nach einem der Ansprüche 3 oder 4,
**dadurch gekennzeichnet, dass** die faltbare Wand (13) auf der Basis von Kohlenstofffasern gebildet ist.

6. Triebwerk nach Anspruch 5,
**dadurch gekennzeichnet, dass** die faltbare Wand (13) durch mindestens eine Elastomerschicht (22) gedoppelt ist.

7. Triebwerk nach einem der Ansprüche 3 bis 6,
**dadurch gekennzeichnet, dass** die faltbare Wand (13) unter der Wirkung eines Druckgases von der gefalteten Position in die entfaltete Position übergeht.

8. Triebwerk nach Anspruch 7, umfassend einen ersten und einen zweiten Behälter (3, 4), die einen Brennstoff bzw. einen verbrennungsfördernden Stoff enthalten, wobei die Behälter (3, 4) durch ein Gas unter Druck gesetzt werden, das in mindestens einem dritten Behälter (5) enthalten ist,
**dadurch gekennzeichnet, dass** das Druckgas, das die faltbare Seitenwand (13) betätigt, aus dem dritten Behälter (5) stammt.

9. Triebwerk nach einem der Ansprüche 1 bis 8, umfassend einen ersten und einen zweiten Behälter (3, 4), die einen Brennstoff bzw. einen verbrennungsfördernden Stoff enthalten, wobei die Behälter (3, 4) durch ein Gas unter Druck gesetzt werden, das in mindestens einem dritten Behälter (5) enthalten ist,
**dadurch gekennzeichnet, dass** der dritte Behälter (5) im ersten Behälter (3) untergebracht ist, der den Brennstoff enthält.

10. Triebwerk nach einem der Ansprüche 1 bis 8, umfassend einen ersten und einen zweiten Behälter (3, 4), die einen Brennstoff bzw. einen verbrennungsfördernden Stoff enthalten, wobei die Behälter (3, 4) durch ein Gas unter Druck gesetzt werden, das in mindestens einem dritten Behälter (5) enthalten ist,
**dadurch gekennzeichnet, dass** der dritte Behälter (5) im zweiten Behälter (4) untergebracht ist, der den verbrennungsfördernden Stoff enthält.
